# EUROPEAN PATENT APPLICATION

(11) **EP 4 390 737 A1**
(43) Date of publication of application: **26.06.2024**
(21) Application number: 22215353.8
(22) Date of filing: 21.12.2022
(51) Int. Cl.: G06F 21/57, G06F 8/61

(54) **METHOD FOR DEPLOYING A CONTAINERIZED CONTROL APPLICATION TO AN INDUSTRIAL CONTROL SYSTEM AND INDUSTRIAL CONTROL SYSTEM**

(71) Applicant: Siemens Aktiengesellschaft, 80333 München (DE)
(72) Inventor: Albrecht, Harald, 90475 Nürnberg (DE); Feist, Christian Peter, 80689 München (DE); Knierim, Christian, 81373 München (DE)
(74) Representative: Siemens Patent Attorneys

(57) **Abstract**

A method for deploying a containerized control application comprising multiple interdependent resources (4) to an industrial control system (1) carried out by the industrial control system (1) comprises: receiving (S1), via an API, multiple resource deployment commands (3) each requesting deployment of one of the interdependent resources (4); and validating (S2) each of the resources (4) against a user-definable security policy (201) comprising a number of rules (202), wherein at least one of the rules (202) references a plurality of the resources (4), wherein the multiple resource deployment commands (3) are processed as a single transaction resulting in deployment or rejection of deployment of the containerized control application dependent on the validation result.

The method provides transaction protection and validation of resource interdependencies during deployment of multiple interdependent resources via multiple separate API calls.

## Description

Independent of the grammatical term usage, individuals with male, female or other gender identities are included within the term.

The present invention relates to the field of industrial control systems on which control tasks relating to an industrial plant are performed by containerized control applications, and, more specifically, to a method for deploying a containerized application to an industrial control system and an industrial control system configured to execute said method.

A containerized control application that is to be deployed on an industrial control system may comprise a plurality of interdependent resources. A deployment specification specifies the resources that need to be deployed to the industrial control system so as to deploy the containerized control application. The deployment is typically performed by a development device, automatically or under control of a human operator, that repeatedly and sequentially calls an application programming interface (API) provided by a container runtime environment such as Docker, an orchestrator such as Kubernetes, or the like, of the industrial control system. In this way, each of the resources specified by the deployment specification is deployed. The development device may be part of a continuous integration/continuous delivery (CI/CD) pipeline, for example.

In order to ensure correct functionality, safety and security of the industrial control system, it is desired to verify whether the deployment specification, the resources therein and the interdependencies therebetween, of a containerized control application to be deployed on the industrial control system adhere to a security policy comprising a set of rules. Merely as one example, a rule may specify that a first resource, such as a specific container instance, may only be allowable if the deployment specification also specifies, as being part of the deployment, a second resource, such as a specific type of network policy with specific security properties.

The Conftest utility available on www.conftest.dev supports verifying a deployment specification against a ruleset written in a open policy definition language such as, for example, Rego. Conftest can be used to verify a deployment specification within a CI/CD pipeline before the containerized application is actually deployed to an industrial control system.

However, the CI/CD pipeline and the industrial control system may be owned by different operators having limited trust in each other. Also, an intruder may bypass the CI/CD pipeline and may directly call the API of the industrial control system, thereby circumventing any rule-based safety checks that are provided within the CI/CD pipeline.

It is therefore desired to perform a rule-based validation of a deployment specification of a containerized control application not by some external device, but by the industrial control system itself, in response to calls to the API of the runtime environment of the industrial control system.

Tools like Open Policy Agent Gatekeeper, which is applicable to Kubernetes, or Open Policy Agent Docker Authz, which is applicable to Docker, may be installed on the industrial control system. Such tools may apply rules to individual API calls requesting deployment of individual resources. However, such tools are not able to relate different API calls requesting deployment of different individual resources with each other. Therefore, rules implemented with OPA Gatekeeper or OPA Docker Authz cannot check aspects of interdependency of different resources that constitute a same containerized control application.

Another solution that may be installed on the industrial control system is the Kyverno solution available from https://kyverno.io. In response to an API call requesting deployment of a first resource, Kyverno may perform a further API call to check whether a second resource on which the resource is dependent, is already deployed on the industrial control system. However, Kyverno cannot discriminate whether or not the second resource is part of the same deployment (belongs to the same containerized control application) as the first resource.

In the light of the foregoing, it is one object of the present invention to further improve the safety and security of an industrial control system on which control tasks relating to an industrial plant are performed by containerized control applications.

According to a first aspect, a method for deploying a containerized control application comprising a plurality of interdependent resources to an industrial control system is carried out by one or more units of the industrial control system and comprises: receiving, via an application programming interface, a plurality of resource deployment commands each requesting deployment of one of the plurality of interdependent resources that are to form the containerized control application; and validating each of the plurality of resources to be deployed against a user-definable security policy, the user-definable security policy comprising a number of rules, wherein at least one of the number of rules references a plurality of the interdependent resources to be deployed. Herein, the plurality of received resource deployment commands are processed as a single transaction that results in deployment or rejection of deployment of the containerized control application dependent on the validation result of said validating of the plurality of interdependent resources.

That is, a plurality of API calls requesting a plurality of resources of the same containerized control application are advantageously treated as a single transaction. That is, the method advantageously interrelates a plurality of API calls with each other. In this way, it advantageously becomes possible to implement rules within the user-definable security policy that validate interdependencies between a plurality of resources of a same containerized control application.

More particularly, conventionally, a security policy that verifies interdependencies between resources is applied by Conftest or the like within the CI/CD pipeline, but no checks were made on the side of the industrial control system. With the proposed method, advantageously, even though the industrial control system receives a plurality of individual API calls, the API calls are treated as a single transaction, thus allowing a unit of the industrial control system to determine interrelations between the individual API calls. Thus, the same security policy that is applied within the CI/CD pipeline may now also be applied by the unit of the industrial control system in response to the individual API calls.

Therefore, even a faulty or malicious containerized control application that has bypassed any validation checks within the CI/CD pipeline and that is already being deployed by performing repetitive API calls to the industrial control system can still be fully validated, including validations of interdependencies between the individual resources, any non-compliance with the security policy can be detected, and a faulty or malicious application can be rejected.

Furthermore, the industrial control system can be kept in a defined state in which the containerized control application is either deployed or rejected. An undefined stage with "dangling" interdependencies, in which some of the resources constitute the containerized control application are deployed, while deployment of others has failed, can be avoided.

In this way, the safety and security of the industrial control system and of an industrial plan controlled by the industrial control system can be improved in a simple manner.

The industrial control system may comprise one or more industrial control devices.

The respective industrial control device may be a general-purpose computing device or a special-purpose computing device, such as an industrial PC or an edge device.

The respective industrial control device may be configured for execution of one or more containerized control applications.

The respective industrial control device may be communicatively connected with at least a data generating source (such as a sensor) or a data consumer (such as an actor) of an industrial plant, and may provide an interface, such as a device driver, a service, or the like, to allow the one or more containerized control applications to perform a control task in the industrial plant by consuming data from the data generating source and/or by outputting data to the data consumer of the industrial plant.

The respective industrial control device may be configured with a containerized runtime environment, such as Docker.

The industrial control system may be configured with an orchestrator, such as Kubernetes.

A respective unit of the one or more units may be a software component, a plugin, a module or the like of the container runtime environment or of the orchestrator; or may be an independent software component or a hardware component that is in communication with the container runtime environment or with the orchestrator.

A "containerized control application" may be an application that is designed to perform a control task or to participate in performing of a control task. Furthermore, the term "containerized" may indicate that the application is designed to run inside one or more containers. A container may be an isolated runtime environment. A container may encapsulate the application or a portion thereof including all its dependencies, such as system libraries, binaries, and configuration files.

A respective resource may be code, such as for example a container instance, a sidecar, a pod, and the like, may be a configuration setting, such as a network policy, may be data, such as configuration data, or may be a cryptographic secret, such as a certificate or an access password. These examples are non-limiting and the resource may be any resource that can be specified in a deployment specification for a containerized control application with Docker, Kubernetes or any other container runtime environment and/or orchestrator.

Any two resources may be referred to as being "interdependent" when a first of the two resources requires presence of the second resource to in order to function as designed. Alternatively or in addition thereto, any two resources may be referred to as being "interdependent" when presence of the second resource is required by at least one rule of the user-definable security policy.

The meaning of the terms "deploy" and "deploying" may comprise one or more of: transferring the resource to the industrial control system, creating the resource on the industrial control system, orchestrating the resource on the industrial control system, configuring the resource on the industrial control system, and launching execution and/or activating of the resource on the industrial control system.

The terms "deployment", "transaction" or "deployment transactions" may refer to the entirety of all (non-optional) resources that constitute the (same) containerized control application that is deployed or is to be deployed on the industrial control system and/or to the step of deploying said entirety of all resources.

In particular, in the receiving step, in addition to the resource deployment commands, the unit that performs the receiving step may further receive the resource to be deployed, or may receive an indication from where to obtain the resource to be deployed, or may receive information on how to create the resource to be deployed.

The user-definable security policy may be stored on one of the units of the industrial control system, and may be editable by an administrator that has undergone proper authorization with the industrial control system, for example.

In particular, a rule that references a plurality of the resources may be a rule that defines a requirement that a second resource is required to be deployed for deployment of a first resource to be allowable, or may be a rule that defines a requirement that a deployed second resource must meet for deployment of the first resource to be allowable, for example.

The expression "(successful) deployment of the containerized control application" may refer to a situation in which, in particular, at least a mandatory subset of all of the resources deployment of which has been requested have been successfully deployed following successful validation according to the security policy; and/or a situation in which the corresponding resource deployment commands have not resulted in an error being returned to the caller.

The expression "rejection of deployment of the containerized control application" may refer to a situation in which at least one validation using any mandatory one of the rules of the security policy failed. Rejection of deployment may mean that even resources that were validated successfully themselves do not remain deployed on the industrial control system after rejection. More particularly, "rejection of deployment of the containerized control application" may mean that a state of the deployed resources on the industrial control system after the end of the (rejected) transaction is the same state as or similar to the state before the start of the deployment transaction.

Rejection of deployment of the containerized control application may be indicated by returning an error in response to any one of the resource deployment commands. Alternatively, or in addition thereto, an error may also be delivered to the caller asynchronously using any suitable communication channel other than the API call itself.

Processing the plurality of received resource deployment commands as a single transaction may, in particular, mean one or more of the following: it is possible to define the security policy such that any interdependencies between any two or more of the resources may be verified independent of the time and order of reception of the corresponding resource deployment commands; the containerized control application may be deployed only if all validations based on the security policy succeed; the containerized control application may not be deployed or may be rolled back if any rule or at least any mandatory rule of the security policy fails to validate. Thus, in particular, the process of deploying a containerized control application comprising a plurality of interdependent resources may thus be regarded as "atomic" in that it either succeeds or fails in full and does not create an undetermined state.

In order to achieve such atomic processing of the plurality of resource deployment commands as a single transaction, for example, a respective received resource deployment command may be deferred until such time as all of the rules pertaining to the resource requested by the respective resource deployment command can be validated.

Alternatively or in addition thereto, in order to achieve such atomic processing of the plurality of resource deployment commands as a single transaction, a respective received resource deployment command may also be processed immediately and may be recorded in a transaction log. Upon completion of the transaction, if it is decided to reject the deployment of the containerized control application, the transaction log may then be used to perform a rollback operation.

Independent of the grammatical term usage of terms like "user", "operator", "administrator" and the like, individuals with male, female or other gender identities are included within the term.

According to an embodiment, the plurality of resource deployment commands of the single transaction are being received sequentially at different points in time.

That is, the proposed method advantageously allows to process the plurality of resource deployment commands as a single transaction in spite of the fact that the plurality of resource deployment commands are received at different points in time.

According to a further embodiment, the plurality of resource deployment commands of the single transaction are being received during a single open network session.

In this way, the method may beneficially detect start of the transaction when a new network session for communication with the application programming interface is established, and may beneficially detect end of the transaction when the network session is terminated.

According to a further embodiment, the plurality of resource deployment commands of the single transaction are associated with each other based on an identifier comprised in each of the plurality of resource deployment commands.

Thus, there is no requirement that all resource deployment commands of the single transaction must be received via a same network session. Rather, different network sessions can be used. Start of a new transaction may be detected when a resource deployment command comprises a previously unseen identifier. End of the corresponding transaction may be detected upon elapsing of a timeout without further commands having the same identifier, or may be detected when a last resource deployment command of the transaction comprises an indication that it is the last resource deployment command of the given transaction.

It is noted herein that detection of the end of the transaction according to various embodiments is beneficial as a trigger for any cleanup tasks that may need to be performed to enable the processing of the deployment as a single transaction. Examples of cleanup tasks include applying any rules of the security that could not be applied previously because some of the resources referred thereby were yet missing; performing a rollback of already-deployed resources if the deployment is rejected; and the like.

According to a further embodiment, the method further comprises, in response to receiving a respective one of the resource deployment commands, deploying the corresponding resource to be deployed to the industrial control system, and recording deployment of said resource in a transaction log for the present single transaction.

Herein, the corresponding resource to be deployed is deployed, without deferring the deployment, i.e., directly in response to the corresponding API call (reception of the corresponding resource deployment command), even if some of the number of rules cannot yet be applied because they reference other resources, the deployment of which has not yet been requested. In order to enable a single atomic transaction comprising a plurality of resource deployments, the deployment of the specific resource is recorded in a transaction log, allowing for later roll-back of said resource in case the deployment of the containerized control application as a whole is rejected.

According to a further embodiment, said validating comprises, in response to receiving a respective one of the resource deployment commands, and prior to said deploying, partially validating the corresponding resource to be deployed only against those of the rules of the user-definable security policy that reference either the resource to be deployed alone or the resource to be deployed and one or more other resources that are already deployed.

That is, those of the rules of the security policy that can already be applied at the time when the one of the resource deployment commands is received are applied immediately without any delay or deferral. If any of these rules fails, deployment of the containerized control application can be denied, for example, and the method may end, thereby avoiding any unnecessary processing load for processing any further resource deployment commands of the same transaction.

According to a further embodiment, in response to receiving a respective one of the resource deployment commands, if a rule of the user-definable security policy references the resource to be deployed and additionally references at least one resource that has not yet been deployed, the rule is enqueued in a rule queue for later evaluation during the present single transaction.

Thus, the resource deployment of which is requested by said resource deployment commands can be deployed immediately, even if some of the rules referring to it cannot yet be applied because they refer also to other not-yet-deployed resources of the same containerized control application. Application of such rules is deferred using the rule queue. The rule queue may then be processed at a later time when the rules enqueued therein become applicable, such as upon deployment of the formerly not-yet-deployed resource(s), or upon detection of the end of the transaction.

According to a further embodiment, said validating comprises, in response to receiving a respective one of the resource deployment commands, if the rule queue comprises at least one rule that references the resource to be deployed and additionally references only one or more resources that have already been deployed during the present single transaction, partially validating the resource to be deployed against said at least one rule.

Thus, any rule enqueued in the rule queue can be applied as soon as all resource deployment comments for all the resources that it references have been received. That is, enqueued rules are processed as soon as possible, thereby avoiding unnecessary processing of further resource deployment commands by detecting non-compliance with any of the enqueued rules as early as possible.

According to a further embodiment, said validating comprises, upon detecting an end of the single transaction, using any rules still enqueued in the rule queue to partially validate the already-deployed resources referenced thereby that have been deployed during the present single transaction.

Thereby, it is advantageously ensured that all rules are enforced properly before the transaction ends.

According to a further embodiment, deployment of the containerized control application is rejected if, during any of said partial validating steps, at least a mandatory one of the rules of the user-definable security policy is not complied with.

In other words, it may be possible to define rules of the security policy to be either mandatory or optional. If an optional rule fails, the deployment of the containerized control application may not be rejected.

According to a further embodiment, upon rejection of deployment of the containerized control application, already-deployed resources that have been recorded in the transaction log for the present transaction are rolled back.

That is, the transaction log advantageously enables roll-back of already-deployed resources in case of a later failure of verification using a rule that was deferred and enqueued in the rule queue, for example.

"Rolling back" of a resource may comprise, for example, one or more of: stopping execution of the resource; disabling the resource; unconfiguring the resource; deleting the resource; adapting the configuration and/or orchestration of any other resource accordingly; and the like. Alternatively or in addition thereto, "rolling back" may also be understood as reverting the state of deployed resources on the industrial configuration system to a state that is the same or similar to the state before deployment of the rolled-back resource.

According to a further embodiment, upon rejection of deployment of the containerized control application, and depending on a user-configurable setting, one or more of the already-deployed resources that have been recorded in the transaction log and that have been fully validated are exempted from being rolled-back.

The user-configurable setting may be comprised in the respective resource deployment command. Alternatively or in addition thereto, the user-configurable setting may be comprised in the security policy. Consequently, the user that can configure the user-configurable setting may be an external developer, or may be an administrator of the industrial control system, respectively.

In other words, it is advantageously possible to specify that certain types of resources and/or certain resources should remain deployed even if the deployment of the entire containerized control application is rejected.

According to a further embodiment, the method further comprises generating a dependency graph based on the user-definable security policy, and, for each of the plurality of interdependent resources to be deployed, determining rules of the user-definable security policy that are to be applied based on the dependency graph.

The dependency graph may be generated once, or may be generated repeatedly in response to each user-initiated change of the user-definable security policy. However, advantageously, a generated dependency graph can be used for multiple deployment transactions, as long as the user-definable security policy does not change.

The dependency graph may be a graph that contains a number of matching clauses, wherein each matching clause maps a matching resource to be deployed to an indication of zero, one or more of the rules of the user-defined secured policy to be applied to the matching resource.

Any embodiment of the first aspect may be combined with any embodiment of the first aspect to obtain another embodiment of the first aspect.

According to a further aspect, the invention relates to a computer program product comprising a program code for executing the above-described method for deploying a containerized control application when run on at least one computer.]

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

In particular, the at least one computer is part of the industrial control system, and may be identified as one or more units of the industrial control system.

According to a further aspect, the invention relates to an industrial control system supporting deployment of a containerized control application comprising a plurality of interdependent resources thereon, the industrial control system comprising: a first unit having an application programming interface configured to receive a plurality of resource deployment commands each requesting deployment of one of the plurality of interdependent resources that are to form the containerized control application; and a second unit configured to validate each of the plurality of resources to be deployed against a user-definable security policy, the user-definable security policy comprising a number of rules, each of the number of rules being definable so as to reference a plurality of the interdependent resources to be deployed. The first unit and/or the second unit is/are configured such that the plurality of resource deployment commands are processed as a single transaction that results in deployment or rejection of deployment of the containerized control application dependent on the validation result of said validating of the plurality of interdependent resources.

The embodiments and features described with reference to the apparatus of the present invention apply mutatis mutandis to the method of the present invention.

The respective unit may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic diagram of a system according to a first exemplary embodiment;
- Fig. 2: shows a flow chart of a deployment method according to the first exemplary embodiment;
- Fig. 3: shows a schematic diagram of a policy engine according to a second exemplary embodiment;
- Fig. 4: shows a flow chart of a preparatory method according to the second exemplary embodiment; and
- Fig. 5: shows a flow chart of a deployment method according to the second exemplary embodiment.

In the Figures, like reference numerals designate like or functionally equivalent elements, unless otherwise indicated.

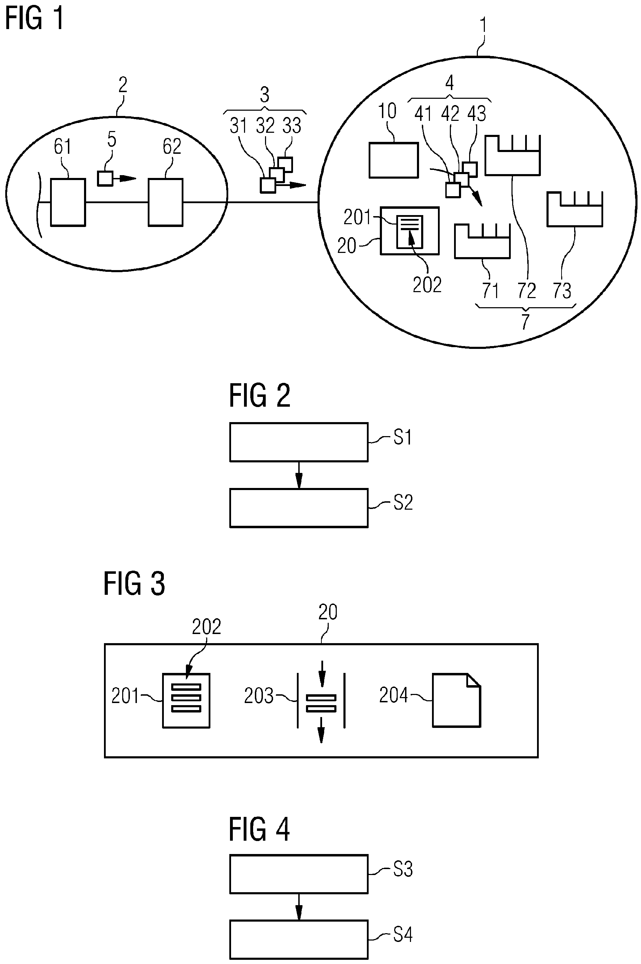

Fig. 1 shows a schematic diagram of a system according to a first exemplary embodiment. The system comprises an industrial control system 1 and a CI/CD pipeline 2.

The industrial control system 1 comprises a plurality of industrial computing devices 7, 71-73. Each of the industrial computing devices 7, 71-73 is connected to a data generating source, such as a sensor, and/or a data consumer, such as an actor, within an industrial plant (not shown). The industrial computing devices 7, 71-73 are configured to support deployment and execution of one or more containerized control applications thereon. In this way, by executing the deployed containerized control applications thereon, the industrial computing devices 7, 71-73 collectively control execution of a control task with the non-shown industrial plant.

The industrial control system 1 further comprises a first unit 10 and a second unit 20. The first unit 10 and the second unit 20 may be formed by execution of a program code on one or more of the industrial control devices 7, 71-73. The first unit 10 and the second unit 20 may also be formed by a program code being executed on a further, non-shown, computing device that is a part of the industrial control system 1. The first unit 10 may be a unit provided by an orchestrator such as Kubernetes. However, alternatively, the first unit 10 and the second unit 20 may also be dedicated hardware units that are a part of the industrial control system 1.

The first unit 10 provides an application programming interface or API that can be called by entities that are external to the industrial control system1 . The first unit 10 is configured to receive, via the application interface, and to process a resource deployment command 3, 31-33 that requests deployment of a resource 4, 41-43 on the industrial control system 1 (on one or more of the industrial control devices 7, 71-73). A containerized control application that comprises a plurality of resources 4, 41-43 may be deployed on the industrial control system 1 by repeatedly calling the API provided by the first unit 10 for each of the resources 4, 41-43 that are to form the containerized control application.

The second unit 20 can also be referred to as "policy engine 20". The policy engine 20 stores a user-definable security policy 201 comprising a set of rules 202 for validating resources 4 to be deployed on the industrial control system 1.

The first unit 10, upon receiving a respective resource deployment command 3 causes the policy engine 20 to validate the corresponding resource 4 against the user-definable security policy 201.

The resource deployment command 3, 31-33 that has been received during one API call comprises resource information descriptive of the one corresponding resource 4, 41-43 that is requested to be deployed. For example, the resource deployment command 3, 31-33 may comprise such information as an identifier, version information, a digital certificate, a digital signature, a bill of materials, configuration information, a download address for downloading a binary image of the resource 4, 41-43, the binary image of the resource 4, 41-43 itself, an indication of from where to obtain any of the aforementioned information, and the like.

Each rule 202 of the user-definable security policy 201 comprises a matching clause that can be matched against resource information to determine whether the respective rule 201 references the corresponding resource 4, 41-43. Each rule 201 may further comprise a requirement or condition that can be validated against the resource information to determine whether the corresponding resource 4, 41-43 complies with the requirement or condition specified by the rule 202.

Examples for such requirements include a requirement for presence of and validity of a specific digital signature, a requirement for certain minimum version numbers of build artifacts listed in the bill of materials, a requirement for adherence to predefined best configuration practices, a requirement for the download address specifying one of a number of trusted repositories, and the like.

Furthermore, each rule 202 may reference one or more additional resources 4, 41-43. That is, each rule 202 may comprise one or more further matching clauses that can be matched to other resource information of other resources 4, 41-43 that have been or will be extracted from API calls other than the one API call.

In this way, a rule 202 may be used to validate interdependencies between a plurality of the resources 4, 41-43.

Merely as one example for a rule that validates interdependencies, a rule 202 may specify that if a first resource 41 is requested for deployment, the version number of which is greater than X, then a second resource 42 must also be requested for deployment in a different API call during the transaction, and the version number of the second resource 42 must be greater than Y.

Another example is a rule 202 that specifies that if a bill of materials of a first resource 41 that is requested for deployment does not specify that the resource 41 incorporates build artifacts that provide a certain security functionality, then a further resource 43 must also be requested for deployment in a different API call during the transaction, and that the further resource 43 must provide an equivalent security functionality.

Further examples include a case where a rule 202 specifies that a container instance resource 4 is only allowable if, within the same transaction, a corresponding network policy resource 4 is also deployed; and a case where a rule 202 specifies that an interface resource 4 may only be associated with a container instance resource 4 if both have been created within the same deployment transaction.

The CI/CD pipeline 2 is an arrangement of a plurality of interconnected computers 61, 62 and is configured for agile software development of containerized control applications.

For example, computing device 61 of the CI/CD pipeline 2 may be configured to build, based on input from non-shown other computers of the CI/CD pipeline 2, a deployment specification 5 that describes the resources 4, 41-43 that form a containerized control application, their interdependencies, instructions for deploying, and the like.

The deployment specification 5 may be a Helm chart or a Yaml file for use with Kubernetes, or the like, for example.

For example, computing device 62 of the CI/CD pipeline 2 may be configured to process the deployment specification 5 and, for each resource 4, 41-43 to be deployed according to the deployment specification 5, call the application interface provided by the first unit 10 of the industrial control system 1. Herein, calling the application interface comprises transmitting a respective resource deployment command 3, 31-33 that requests deployment of the corresponding resource 4, 41-43 to be deployed.

Fig. 2 shows a flow chart of a deployment method that is executed by the units 10, 20 of the industrial control system 1 according to the first exemplary embodiment. A deployment method according to the first exemplary embodiment will now be described with reference to Fig. 1 and Fig. 2. Herein, Fig. 2 illustrates the flow of a single deployment transaction that results in either deployment or rejection of deployment of a single containerized control application comprising a plurality of interdependent resources 4, 41-43.

In step S1, in response to a respective API call being made by computing device 62, the first unit 10 receives the respective corresponding one resource deployment command 3, 31-33 that requests deployment of one corresponding resource 4, 41-43. Herein, the resources 4, 41-43 are interdependent and are to form the containerized control application to be deployed.

In step S2, the first unit 10 uses the policy engine 20 (second unit) to validate the respective resource 4, 41-43 to be deployed against the user-definable security policy 201.

Furthermore, according to the present exemplary embodiment, the first unit 10 and the policy engine 20 process the plurality of resource deployment commands 3 that were received in step S1 as a single transaction.

Herein, "processing a resource deployment command" comprises deploying the corresponding resource 4, 41-43 that is requested to be deployed dependent on a validation result of step S2.

Herein, "as a single transaction" means that the first unit 10 and the policy engine 20 operate in coordination such that at the end of the transaction, either one of the following two states A) or B) is achieved:
A) All applicable rules 202 of the user-definable security policy 201 have been applied, and validation of all of the plurality of resources 4, 41-43 was successful. All of the plurality of resources 4, 41-43 constituting the containerized control application are deployed on the industrial control system 1; or:
B) Validation of at least one of the plurality of resources 4, 41-43 according to at least one of the applicable rules 202 of the user-definable security policy 201 failed. None of the plurality of resources 4, 41-43 are deployed on the industrial control system 1.

The single transaction may thus be described as "atomic".

However, the skilled person will appreciate that the plurality of resource deployment commands 3, 31-33 are received sequentially and at different points in time.

Since at least one of the rules 202 of the user-definable security policy 201 references more than one of the resources 4, 41-43, a "forward reference" situation may occur in which, at the time of an API call in which a resource deployment command 31 requesting deployment of a given resource 41 is received, a rule of 202 the user-defined ruleset 201 may reference the given resource 41 but may also reference a further resource 42 that has not yet been requested for deployment. In this case, at the time of responding to the API call, the resource information of the further resource 42 is not yet available. As such, it is not possible to apply and evaluate the rule 202.

Therefore, according to the first exemplary embodiment, the policy engine 20 may postpone application of the applicable rules 202 of the user-definable security policy 201 until such time when all resources 4, 41-43 of the present transaction will have been requested for deployment, and corresponding resource information will be available. For example, the policy engine 20 may apply the applicable rules 202 of the user-definable security policy 201 only at the end of the transaction, when all resource deployment commands 3, 31-33 have been received.

Likewise, the first unit 10 may postpone the deployment of the resources 4, 41-43 until a time when all resources 4, 41-43 that constitute the containerized control application have been validated successfully.

Alternatively, the first unit 10 may proceed to deploy each of the resources 4, 41-43 in response to the respective resource deployment command 3, 31-33 in step S1 without waiting for the validation. The validating step S2, on the other hand, may be carried out only when all resources 4, 41-43 are deployed, i.e. at the end of the transaction. If the validation fails (if validation of any of the already deployed resources 4, 41-43 according to any of the applicable rules 202 fails), then all the already deployed resources 4, 41-43 may be rolled back.

Thus, advantageously, the containerized control applications and their resources 4, 41-43 that are deployed on the industrial control system 1 are always kept in a defined state at all times.

Moreover, advantageously, a containerized control application comprising a plurality of resources 4, 41-43 with interdependencies may be deployed as a single transaction.

Herein, advantageously, rules 202 can be defined that reference and validate interdependencies between a plurality of the resources 4, 41-43.

Thus, a security policy that validates resources as well as their interdependencies may advantageously be applied on the side of the industrial control system 1 rather than only on the side of the CI/CD pipeline 2, thereby increasing security and trust.

Yet still, a computing device 62 of the CI/CD pipeline 2 can perform deployment of the containerized control application in the usual manner by sequentially calling the API of the industrial control system 1 for each of the plurality of resources 4, 41-43 at different points in time.

Further techniques for more efficiently processing the plurality of resource deployment commands 3 as a single transaction will now be described in connection with the second exemplary embodiment.

The functional schematic diagram shown in Fig. 1 for the first exemplary embodiment also applies to the second exemplary embodiment, and description thereof is not repeated. Furthermore, in the first and second exemplary embodiment, like elements have like reference numerals, and redundant descriptions of similar features and advantages are omitted.

Fig. 3 shows a schematic diagram of a policy engine 20 according to the second exemplary embodiment.

The policy engine 20 according to the second exemplary embodiment does not only store a user-definable security policy 201 comprising a number of rules 202; but also maintains a rule queue 203 and a transaction log 204. The specific functionality of the rule queue 202 and the transaction log 204 will be described later.

Fig. 4 shows a flow chart of a preparatory method according to the second exemplary embodiment.

In step S3 of the preparatory method, the policy engine 20 receives the user-definable security policy 201 including the plurality of rules 202.

In optional step S4, the policy engine 20 generates a dependency graph (not shown) based on the received user-definable security policy 201.

The dependency graph is a graph that associates resources 4 with applicable rules 202 of the user-definable security policy 201. Herein, a rule 202 is deemed "applicable" to a specific resource if, for example, it contains a matching clause that matches the resource information of the specific resource 4.

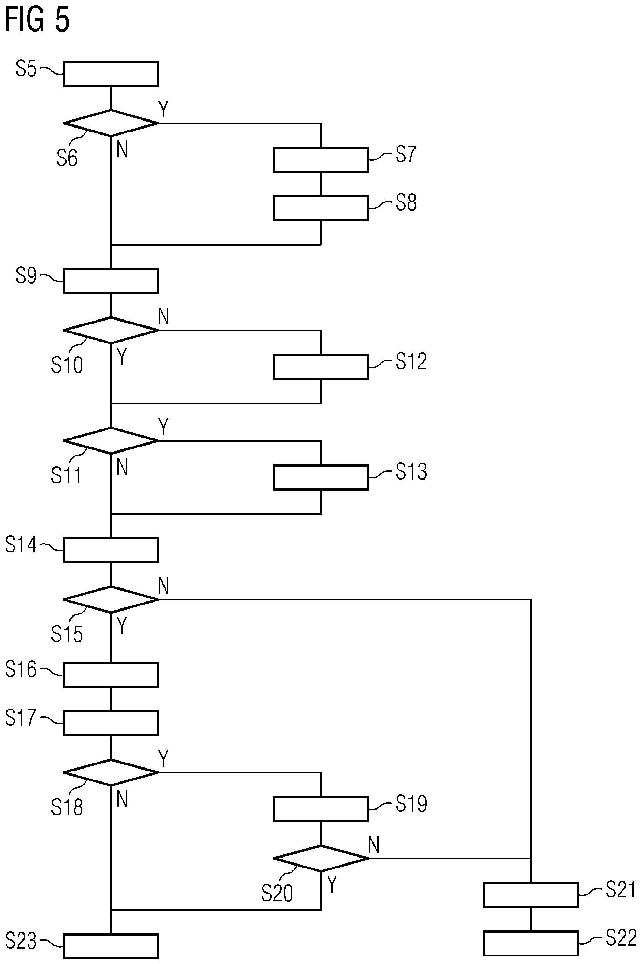

Fig. 5 shows a flow chart of a deployment method according to the second exemplary embodiment. Reference is now made to Fig. 1, Fig. 3 and Fig. 5.

The flow of the deployment method shown in Fig. 5 is executed repeatedly during a single transaction. More specifically, the flow shown in Fig. 5 is executed whenever the API provided by the first unit 10 of the industrial control system 1 is called and a resource deployment command 3 requesting deployment of a specific resource 4, which is one of the plurality of interdependent resources 4 forming the containerized control application, is transmitted as part of the API call.

In step S5, the first unit 10 receives the resource deployment command 3.

In step S6, the first unit 10 decides whether the current API call marks the start of a new transaction. The decision may be based on a new network session having been established. Alternatively, the decision may be based on a new transaction identifier being comprised in the received resource deployment command 3.

That is, the first unit 10 may recognize that the plurality of API calls relate to a same transaction, i.e. to a same containerized control application, by comparing the identifiers comprised in the received resource deployment commands 3, or by receiving the plurality of API calls over a same open network session.

If the transaction is a new transaction (Y in S6), the method proceeds with step S7. Otherwise (N in S6), the method proceeds with Step S9.

In step S7, the transaction log 204 is initialized (set to an empty state). The transaction log 204 is a log that is configured to store resource information of any resources 4 43 that will be deployed during the present transaction, and may further store rollback information (to be described later) for the deployed resources 4.

In step S8, the rule queue 203 is initialized (set to an empty state).

In step S9, the first unit 10 extracts resource information from the received resource deployment command 3. Based on the resource information extracted from the resource information, the profile engine 20 determines, from all of the rules 202 of the user-definable security policy 201, a set of applicable rules 202 that are applicable to the specific resource 4 that is requested to be deployed in the current API call. For example, the profile engine 20 may iterate through the entire set of rules 202 to identify rules that reference the resource 4. Alternatively, if a dependency graph has been created in preparatory step S4, the profile engine 20 may supply the resource information to the dependency graph to quickly obtain the applicable rules 202.

In step S10, the profile engine 20 determines whether all of the applicable rules 202 determined in step S9 can be evaluated. Herein, a rule 202 can only be evaluated if resource information of all resources 4 that the rule references is available either from the resource deployment command 3 of the current API call or from the transaction log 204. In other words, only applicable rules 202 that reference the specific resource 4 and optionally reference any further resources 4 that have already been deployed during previous API calls of the present transaction can be evaluated. However, if one of the applicable rules 202 references at least one resource 4 that has not yet been deployed (deployment of which has not yet been requested), it cannot be evaluated.

If all applicable rules 202 can be evaluated (Y in S10), the method proceeds with step S11. However, if there is at least one applicable rule 202 that cannot be evaluated (N in S10), the method branches to step S12.

In step S12, the profile engine 20 enqueues the one or more applicable rules 202 that cannot yet be evaluated in the rule queue 203 for later evaluation. After that, the method also proceeds with step 511.

In step S11, the profile engine 20 checks the rule queue 203 to determine whether the rule queue 203 contains any rules 202 that were previously (during a previous API call) enqueued in the rule queue 203, but that can now be evaluated because the resource information of the resource 4, 41-43 of the current API call is now available. If so (Y in S11), the method branches to step S13. Otherwise (N in S11), the method goes directly to step S14.

In step S13, the profile engine 20 adds any rules enqueued in the rule queue 203 that can now be evaluated to the set of applicable rules that was initially created in step S9. After that, the method also proceeds with step S14.

In step S14, the profile engine 20 validates the specific resource 4 using the set of applicable rules 202 that was determined in steps S9 and, potentially, S13. This step may be understood as partially validating the specific resource 4 "as much as currently possible", because some rules 202 that should have been applied cannot yet be applied, but are enqueued in the rule queue 203 for later application.

In step S15, the profile engine 20 determines whether the validation of step S14 was successful. The validation is deemed to be successful if all conditions and requirements specified by the applicable rules 202 are complied with by the specific resource 4 and by any further already-deployed resources 4 referenced by the set of applicable rules 202.

If the validation was not successful (N in S15), i.e. if at least one condition or requirement specified by at least one of the applicable rules 202 was not complied with, the method branches to step S21 to perform a rollback to be described later in detail. Otherwise (Y in S15), the method continues with step S16.

In step S16, the first unit 10 deploys the specific resource 4 on the industrial control system 1.

In Step S17, the first unit 10 records deployment of the specific resource 4 in the transaction log 201. More specifically, the first unit 10 stores the following information in the transaction log 201: the resource information extracted from the resource deployment command 4, and, optionally, also one or more of: a timestamp, a transaction identifier, and roll-back information. The rollback information comprises any information that is required to roll back, or undo, the deployment of the specific resource 4. The rollback information my comprise: an address or identifier of the specific industrial control device 7 on which the specific resource 4 was deployed, a process ID of a process of the deployed specific resource 4 that is to be stopped in case of rollback, a memory area reserved by the deployed specific resource 4 that is to be released in case of rollback, a file name and path of a file that is be deleted in case of rollback, configuration information that describes configuration settings that should be reverted, deleted or undone in case of rollback, and the like.

In step S18, a determination is made as to whether the present API call is a last API call of the present transaction. In the second exemplary embodiment, said determined is made based on a commit flag comprised in the resource deployment command 3. If the transaction is not the last transaction (N in S18), the method branches to S23.

In step S23, the current API call returns with a result code that indicates success of the current API call, and the flow ends.

If the transaction is the last transaction (Y in S18), the method proceeds with step S19.

In step S19, the method applies any rules 202 that are still enqueued in the rule queue 203 in the same manner that has been described for step S14. However, here, a case may arise in which a rule 202 that is still enqueued in the rule queue 203 at the end of the transaction cannot be applied because it references at least one resource 4 that has not been requested for deployment during the entire transaction. In such a case, application of such a rule 202 is deemed to have resulted in failure.

In step S20, the method determines whether validation using the rules applied in step S19 was successful in the same manner as has been described above for step S15. If the validation was successful (Y in S20), the method branches to step S23, and the API call returns an indication of success. If the validation failed (N in S20), the method branches to step S21 and a rollback is performed.

Step S21 is a rollback step that is performed when at least one partial validation using at least one of the applicable rules 202 in step S14 or S19 failed. In Step S21, the first unit references the transaction log 201 and sequentially, for example in a last in first out manner, rolls back deployment of each of the resources 4 that have been deployed to the industrial control system 1 during the present transaction. In particular, any processes that have been launched are terminated, memory areas that have been reserved are released, files that have been uploaded are deleted, and any configuration or orchestration settings that have been made during deployment of each resource 4 are reverted to their previous state.

The method then proceeds with step S22, in which the current API call returns with a return code indicating failure of the current API call, and the flow ends.

The flow of Fig. 5 of the deployment method of the second exemplary embodiment as outlined above is executed repetitively in response to each individual API call requesting deployment of a respective single resource 4, 41-43. Thanks to the ability to postpone rule application using the rule queue 203 and thanks to the ability to perform early deployment with later rollback in case of later failure using the transaction log 204, the flow of the deployment method can immediately return from each API call with either success or failure without any pause, delay, stalls or the like. Yet still, it is possible to define rules that reference more than one of the resources 4, 41-43 in order to validate resource interdependencies. Furthermore, the plurality of distinct API calls are processed as a single transaction that ultimately results in either complete deployment of the containerized control application or in complete rejection (thanks to rollback) of deployment of all of the resources 4 of the containerized control application.

As such, the second exemplary embodiment advantageously provides a very lightweight and efficient solution with low memory requirements and low overhead for validating a containerized control application using a complex security policy on the side of the industrial control system 1 solely in response to API calls rather than on the side of the CI/CD pipeline 2.

Thus, security, safety, and functionality of the industrial control system 1 are advantageously improved in an efficient manner.

Although the present invention has been described in accordance with preferred embodiments, it is obvious for the person skilled in the art that modifications are possible in all embodiments.

There is no limitation as to which resource 4, 41-43 is deployed to which industrial control device 7, 71-73. The skilled person appreciates that, if the first unit 10 is provided by an orchestrator such as Kubernetes, the orchestrator may, within certain constraints, freely decide to which industrial control device 71-73 each resource 41-43 is to be deployed. For example, the orchestrator may decide to apply all resources 41-43 of a same containerized control application to a single one of the industrial control devices 7 (for example, to industrial control device 72), and to apply all resources of another containerized control application to another one of the industrial control devices 7. However, resources 4 of a same containerized control application may also be deployed to different industrial control devices 7.

The exemplary embodiments have been described with reference to Kubernetes as an orchestrator that provides the first unit 10 and that orchestrates one or more containerized control applications on an industrial control system 1 comprising a plurality of industrial control devices 7. However, this does not constitute a limitation. The teachings described herein may also be applied to an industrial control system 1 that does not have an orchestrator and may comprise only a single industrial control device 7, such as an edge device, on which a container runtime environment, such as Docker, enables execution of a plurality of containerized control applications. In this case, rather than the orchestrator, the containerized runtime environment, such as Docker, can provide the first unit 10 with the functionality for receiving resource deployment commands, deploying resources and the like. In this case, the deployment file 5 may be a Docker compose file that describes a containerized control application formed by a plurality of container instances and further resources.

In the described exemplary embodiments, when at least one of the applicable rules 202 of the user-definable security policy 201 is not complied with such that a partial validation using said rule fails, deployment of the containerized control applications is rejected and no resources 4 are deployed or all resources 4 that have been deployed during the present transaction so far are rolled back.

However, it is conceivable that some of the rules 202 of the user-definable security policy 201 are flagged as non-mandatory, and non-compliance with a non-mandatory rule does not lead to rejection of deployment, but rather to some other action, such as deployment of another security resource, change of configuration settings, warning messages sent to an administrator, or the like. In this case, only noncompliance with mandatory rules leads to rejection of deployment.

It is also conceivable that in the case of rejection of deployment of the containerized control application, not all resources 4 that have been deployed during the present transaction so far are rolled back or prevented from being deployed. Rather, one or both of the resource deployment commands 3 and the user-definable security policy 201 may comprise a user-configurable setting that specifies that certain resources 4 (resources that are explicitly specified, resources that meet a certain criterion or condition, or the like) shall be exempted from being rolled back and/or shall be exempted from being prevented from deployment. The exemption may be recorded as a flag in the transaction log when the resource 4 is deployed in steps S16 and S17. During the rollback performed in step S22, any resources 4 marked as exempted will not be rolled back.

In the flow shown in Fig. 5, the rule queue 203 is checked in steps S11 and S13, wherein a rule enqueued in the rule queue 203 is added to the set of applicable rules as soon as resource information for all resources 4 referenced by the enqueued rule 202 is available. The rule queue 203 is also checked in steps S18-S20, wherein any rules 202 left in the rule queue are enforced only at the end of the transaction. However, in order to ensure compliance with all applicable rules 202, it suffices if only steps S18 to S20 are part of the flow of Fig 5, and steps S11 and S13 can be omitted. Alternatively, steps S11 and Steps S13 can be used, but step S19 can be omitted, while in step S20, a failure is determined and the method branches to rollback step S21 if the rule queue 203 still comprises any enqueued rules 202 when the method reaches step S20.

Also, a modification of the second exemplary embodiment is conceivable in which the rule queue 203 and any features related thereto are omitted. In this modification, resources 4 are immediately deployed in response to reception of the corresponding resource deployment commands 3 without prior validation, and deployment of each resource 4 is recorded in the transaction log 204. Upon detection of an end of the transaction, the transaction log 204 is used to determined applicable rules 202 from the user-defined security policy 201 that are applicable to any of the deployed resources 4, and the deployed resource 4 are validated using the determined applicable rules 202. If the requirements or conditions imposed by at least a mandatory one of the applicable rules 202 are not complied with, all deployed transactions 4 that are recorded in the transaction log 204 are rolled back.

For the second exemplary embodiment, it has been described that an end of the transaction is detected in step S18 based on a commit flag comprised in a resource deployment command 3 that designates a last resource deployment command 3 of a transaction. However, the end of the transaction may also be detected in response of a special commit command being transmitted separately to the API of the first unit 10, or in response to expiry of a timeout timer.

## Claims

1. A method for deploying a containerized control application comprising a plurality of interdependent resources (4) to an industrial control system (1), the method being carried out by one or more units (10, 20) of the industrial control system (1) and comprising:
receiving (S1), via an application programming interface, a plurality of resource deployment commands (3) each requesting deployment of one of the plurality of interdependent resources (4) that are to form the containerized control application; and
validating (S2) each of the plurality of resources (4) to be deployed against a user-definable security policy (201), the user-definable security policy (201) comprising a number of rules (202), wherein at least one of the number of rules (202) references a plurality of the interdependent resources (4) to be deployed,
wherein the plurality of received resource deployment commands (3) are processed as a single transaction that results in deployment or rejection of deployment of the containerized control application dependent on the validation result of said validating of the plurality of interdependent resources (4).

2. The method of claim 1,
wherein the plurality of resource deployment commands (3) of the single transaction are being received sequentially at different points in time.

3. The method of claim 1 or 2,
wherein the plurality of resource deployment commands (3) of the single transaction are being received during a single open network session.

4. The method of any one of claims 1 to 3,
wherein the plurality of resource deployment commands (3) of the single transaction are associated with each other based on an identifier comprised in each of the plurality of resource deployment commands (3).

5. The method of any one of claims 1 to 4,
further comprising, in response to receiving a respective one of the resource deployment commands (3), deploying the corresponding resource (4) to be deployed to the industrial control system (1), and recording deployment of said resource (4) in a transaction log (204) for the present single transaction.

6. The method of claim 5,
wherein said validating (S2) comprises, in response to receiving a respective one of the resource deployment commands (3), and prior to said deploying, partially validating the corresponding resource (4) to be deployed only against those of the rules (202) of the user-definable security policy (201) that reference either the resource (4) to be deployed alone or the resource (4) to be deployed and one or more other resources (4) that are already deployed.

7. The method of claim 6,
wherein, in response to receiving a respective one of the resource deployment commands (3), if a rule (202) of the user-definable security policy (201) references the resource (4) to be deployed and additionally references at least one resource (4) that has not yet been deployed, the rule is enqueued in a rule queue (203) for later evaluation during the present single transaction.

8. The method of claim 7,
wherein said validating (S2) comprises, in response to receiving a respective one of the resource deployment commands (3), if the rule queue (203) comprises at least one rule (202) that references the resource (4) to be deployed and additionally references only one or more resources (4) that have already been deployed during the present single transaction, partially validating the resource (4) to be deployed against said at least one rule (202).

9. The method of any one of claims 7 or 8,
wherein said validating (S2) comprises, upon detecting an end of the single transaction, using any rules (202) still enqueued in the rule queue (203) to partially validate the already-deployed resources (4) referenced thereby that have been deployed during the present single transaction.

10. The method of any one of claims 6 to 9,
wherein deployment of the containerized control application is rejected if during any of said partial validating steps, at least a mandatory one of the rules (202) of the user-definable security policy (201) is not complied with.

11. The method of any one of claims 5 to 10,
wherein, upon rejection of deployment of the containerized control application, already-deployed resources (4) that have been recorded in the transaction log (204) for the present transaction are rolled back.

12. The method of claim 11,
wherein, upon rejection of deployment of the containerized control application, and depending on a user-configurable setting, one or more of the already-deployed resources (4) that have been recorded in the transaction log (204) and that have been fully validated are exempted from being rolled back.

13. The method of any one of claims 1 to 12,
further comprising:
generating a dependency graph based on the user-definable security policy (201), and
for each of the plurality of interdependent resources (4) to be deployed, determining rules of the user-definable security policy (201) that are to be applied based on the dependency graph.

14. A computer program product comprising instructions which, when the program is executed by an industrial control system (1), the industrial control system (1) supporting deployment of a containerized control application comprising a plurality of interdependent resources (4) thereon, cause the industrial control system to carry out the method of any of claims 1 to 13.

15. An industrial control system (1) supporting deployment of a containerized control application comprising a plurality of interdependent resources (4) thereon, the industrial control system (1) comprising:
a first unit (10) having an application programming interface configured to receive a plurality of resource deployment commands (3) each requesting deployment of one of the plurality of interdependent resources (4) that are to form the containerized control application; and
a second unit (20) configured to validate each of the plurality of interdependent resources (4) to be deployed against a user-definable security policy (201), the user-definable security policy (201) comprising a number of rules (202), each of the number of rules (202) being definable so as to reference a plurality of the resources (4) to be deployed,
wherein the first unit (10) and/or the second unit (20) is/are configured such that the plurality of resource deployment commands (3) are processed as a single transaction that results in deployment or rejection of deployment of the containerized control application dependent on the validation result of said validating of the plurality of interdependent resources (4).
